# EUROPÄISCHE PATENTSCHRIFT

(11) **EP 3 877 177 B1**
(45) Veröffentlichungstag und Bekanntmachung des Hinweises auf die Patenterteilung: **10.08.2022**
(21) Anmeldenummer: 19791266.0
(22) Anmeldetag: 25.10.2019
(51) Int. Cl.: B32B 17/10, C03C 17/36, G02B 27/01, G02B 5/30, H05B 3/86

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED RADIATION
DISPOSITIF DE PROJECTION POUR UN AFFICHAGE TÊTE HAUTE (HUD) À RAYONNEMENT P-POLARISÉ

(30) Priorität: 09.11.2018 EP 18205413
(43) Veröffentlichungstag der Anmeldung: 15.09.2021
(73) Patentinhaber: Saint-Gobain Glass France, 92400 Courbevoie (FR)
(72) Erfinder: FISCHER, Klaus, 52477 Alsdorf (DE); SCHAEFER, Dagmar, 52134 Herzogenrath (DE); ZIMMERMANN, Roberto, 42653 Solingen (DE)
(74) Vertreter: Feist, Florian Arno
(86) Internationale Anmeldenummer: PCT/EP2019/079140
(87) Internationale Veröffentlichungsnummer: WO 2020/094422

(56) Entgegenhaltungen:
- WO-A1-2017/198363
- DE-A1-102014 220 189
- DE-U1-202017 102 552
- US-A- 2 750 833

## Beschreibung

Die Erfindung betrifft eine Projektionsanordnung für ein Head-Up-Display und ihre Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (57,2° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine elektrisch leitfähige Beschichtung auf. Die DE102014220189A1 offenbart eine solche HUD-Projektionsanordnung, welche mit p-polarisierter Strahlung betrieben wird. Als reflektierende Struktur wird unter anderem eine einzelne metallische Schicht vorgeschlagen mit einer Dicke von 5 nm bis 9 nm, beispielsweise aus Silber oder Aluminium.

Es sind auch komplexere elektrisch leitfähige Beschichtungen für Windschutzscheiben bekannt, die beispielsweise als IR-reflektierende Beschichtungen verwendet werden, um die Erwärmung des Fahrzeuginnenraums zu verringern und dadurch den thermischen Komfort zu verbessern. Die Beschichtungen können aber auch als beheizbare Beschichtungen verwendet werden, indem sie mit einer Spannungsquelle verbunden werden, so dass ein Strom durch die Beschichtung fließt. Geeignete Beschichtungen enthalten leifähige, metallische Schichten, insbesondere auf Basis von Silber. Da diese Schichten korrosionsanfällig sind, ist es üblich, sie auf die der Zwischenschicht zugewandten Oberfläche der Außenscheibe oder der Innenscheibe aufzubringen, so dass sie keinen Kontakt zur Atmosphäre haben. Silberhaltige transparente Beschichtungen sind beispielsweise bekannt aus WO03/024155, US2007/0082219A1, US2007/0020465A1, WO2013/104438 oder WO2013/104439.

Soll eine leitfähige Beschichtung einerseits als IR-reflektierende oder heizbare Beschichtung verwendet werden und andererseits als Reflexionsfläche für ein HUD, so werden hohe Anforderungen an ihre optischen und elektrischen Eigenschaften gestellt.

Der Erfindung liegt die Aufgabe zugrunde, eine verbesserte Projektionsanordnung für ein Head-Up-Display bereitzustellen. Die Verbundscheibe der Projektionsanordnung soll ohne Keilfolie auskommen und eine elektrisch leitfähige Beschichtung aufweisen, welche insbesondere auch als beheizbare Beschichtung einsetzbar ist. Die HUD-Projektion soll mit hoher Intensität erzeugt werden und die Verbundscheibe soll ein angenehmes Erscheinungsbild aufweisen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Erfindungsgemäß wird p-polarisierte Strahlung zur Erzeugung des HUD-Bildes verwendet und die Verbundscheibe weist eine elektrisch leitfähige Beschichtung auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (57,2°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, so dass auf die Verwendung einer kostspieligen Keilfolie verzichtet werden kann. Die erfindungsgemäße Beschichtung weist relativ dünne leitfähige Schichten, insbesondere Silberschichten auf im Vergleich zu bislang üblichen Beschichtungen. Auch dadurch wird die Herstellung der Scheibe kostengünstiger gestaltet. Die Erfinder haben erkannt, dass die Beschichtung dennoch geeignet ist, p-polarisierte Strahlung mit hinreichender Intensität zu reflektieren, um ein HUD-Bild zu erzeugen, und als beheizbare Beschichtung eingesetzt zu werden, insbesondere bei Verwendung von Spannungsquellen von 40-50 V, wie sie insbesondere bei Elektrofahrzeugen üblich sind. Auch können die optischen Anforderungen an eine Windschutzscheibe erfüllt werden, insbesondere hinsichtlich Transparenz und Farbgebung. Das sind große Vorteile der vorliegenden Erfindung.

Die erfindungsgemäße Projektionsanordnung für ein Head-Up-Display (HUD) umfasst mindestens eine Verbundscheibe mit einer elektrisch leitfähigen Beschichtung und einen Projektor. Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Verbundscheibe umfasst eine Außenscheibe und eine Innenscheibe, die über eine thermoplastische Zwischenschicht miteinander verbunden sind. Die Verbundscheibe ist dafür vorgesehen, in einer Fensteröffnung, insbesondere der Fensteröffnung eines Fahrzeugs, den Innenraum gegenüber der äußeren Umgebung abzutrennen. Mit Innenscheibe wird im Sinne der Erfindung die dem Innenraum (insbesondere Fahrzeuginnenraum) zugewandte Scheibe der Verbundscheibe bezeichnet. Mit Außenscheibe wird die der äußeren Umgebung zugewandte Scheibe bezeichnet. Die Verbundscheibe ist bevorzugt eine Fahrzeug-Windschutzscheibe (insbesondere die Windschutzscheibe eines Kraftfahrzeugs, beispielsweise eines Personen- oder Lastkraftwagens).

Die Verbundscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die Verbundscheibe weist eine elektrisch leitfähige Beschichtung auf, insbesondere eine transparente, elektrisch leitfähige Beschichtung. Die elektrisch leitfähige Beschichtung ist bevorzugt auf einer der Zwischenschicht zugewandten Oberflächen der beiden Scheiben, also der innenraumseitigen Oberfläche der Außenscheibe oder der außenseitigen Oberfläche der Innenscheibe, aufgebracht. Alternativ kann die elektrisch leitfähige Beschichtung auch innerhalb der thermoplastischen Zwischenschicht angeordnet sein, beispielsweise aufgebracht auf einer Trägerfolie, die zwischen zwei thermoplastischen Verbindefolien angeordnet ist. Die leitfähige Beschichtung kann beispielsweise als IR-reflektierende Sonnenschutzbeschichtung vorgesehen sein oder auch als heizbare Beschichtung, welche elektrisch kontaktiert ist und sich bei Stromdurchfluss erwärmt. Unter einer transparenten Beschichtung wird eine Beschichtung verstanden, die eine mittlere Transmission im sichtbaren Spektralbereich von mindestens 70 %, bevorzugt mindestens 80 % aufweist, die also die Durchsicht durch die Scheibe nicht wesentlich einschränkt. Bevorzugt sind mindestens 80% der Scheibenoberfläche mit der erfindungsgemäßen Beschichtung versehen. Insbesondere ist die Beschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Verbundscheibe gewährleisten sollen und daher nicht mit der Beschichtung versehen sind. Der umlaufende unbeschichtete Randbereich weist beispielsweise eine Breite von bis zu 20 cm auf. Er verhindert den direkten Kontakt der Beschichtung zur umgebenden Atmosphäre, so dass die Beschichtung im Innern der Verbundscheibe vor Korrosion und Beschädigung geschützt ist.

Die elektrisch leitfähige Beschichtung ist ein Schichtstapel oder eine Schichtenfolge, umfassend mehrere elektrisch leifähige, insbesondere metallhaltige Schichten, wobei jede elektrisch leitfähige Schicht jeweils zwischen zwei dielektrischen Schichten oder Schichtenfolge angeordnet ist. Die Beschichtung ist also ein Dünnschicht-Stapel mit n elektrisch leitfähigen Schichten und (n+1) dielektrischen Schichten oder Schichtenfolgen, wobei n eine natürliche Zahl ist und wobei auf eine untere dielektrische Schicht oder Schichtenfolge jeweils im Wechsel eine leitfähige Schicht und eine dielektrische Schicht oder Schichtenfolge folgt. Solche Beschichtungen sind als Sonnenschutzbeschichtungen und heizbare Beschichtungen bekannt, wobei die elektrisch leitfähigen Schichten typischerweise auf Basis von Silber ausgebildet sind.

Die erfindungsgemäße elektrisch leitfähige Beschichtung ist derart eingestellt, insbesondere durch die Wahl der Materialien und Dicken der Einzelschichten sowie den Aufbau der dielektrischen Schichtenfolgen, dass die Verbundscheibe mit der Beschichtung im gesamten Spektralbereich von 450 nm bis 650 nm einen Reflexionsgrad gegenüber p-polarisierter Strahlung von mindestens 10% aufweist. Damit ist gemeint, dass im Spektralbereich von 450 nm bis 650 nm an keiner Stelle ein Reflexionsgrad auftritt, der geringer als 10% ist. Damit wird ein hinreichend intensitätsstarkes Projektionsbild erzeugt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum.

In einer vorteilhaften Ausgestaltung weist die Verbundscheibe mit der elektrisch leitfähigen Beschichtung im gesamten Spektralbereich von 450 nm bis 650 nm einen Reflexionsgrad gegenüber p-polarisierter Strahlung von mindestens 12% auf, bevorzugt von mindestens 15%. Der Reflexionsgrad gegenüber p-polarisierter Strahlung beträgt beispielsweise im gesamten Spektralbereich von 450 nm bis 650 nm von 10 % bis 20 %, bevorzugt von 12 % bis 17 %. Reflexionsgrade in diesem Bereich lassen sich mit der erfindungsgemäßen Beschichtung problemlos realisieren und sind ausreichend hoch, um eine intensitätsstarke HUD-Projektion zu erzeugen.

Der Mittelwert des Reflexionsgrad gegenüber p-polarisierter Strahlung beträgt bevorzugt im gesamten Spektralbereich von 450 nm bis 650 nm von 10 % bis 20 %. Um eine möglichst farbneutrale Darstellung des Projektorbildes zu erreichen, sollte das Reflexionsspektrum möglichst glatt sein und keine ausgeprägten lokalen Minima und Maxima ausweisen. Im Spektralbereich von 450 nm bis 650 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades (bezogen auf 100% eingestrahlte Strahlung) in einer bevorzugten Ausgestaltung höchstens 5 % betragen, besonders bevorzugt höchstens 3 %, ganz besonders bevorzugt höchstens 1 %.

Die angegeben bevorzugten Bereiche für den Reflexionsgrad gegenüber p-polarisierter Strahlung beziehen sich in einer besonders vorteilhaften Ausgestaltung auf den gesamten Spektralbereich von 450 nm bis 700 nm, bevorzugt von 450 nm bis 800 nm.

Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Der Projektor ist innenraumseitig der Verbundscheibe angeordnet und bestrahlt die Verbundscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist erfindungsgemäß p-polarisiert, bevorzugt im Wesentlichen rein p-polarisiert - der p-polarisierte Strahlungsanteil beträgt also 100% oder weicht nur unwesentlich davon ab. Damit wir ein besonders intensitätsstarkes HUD-Bild erzeugt und Geisterbilder können vermieden werden. Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des HUD-Bereichs aufgespannt.

Die Strahlung des Projektors trifft bevorzugt mit einem Einfallswinkel von 45° bis 70°, insbesondere von 60° bis 70° auf die Verbundscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Verbundscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Verbundscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 57,2°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Verbundscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Verbundscheibe, ebenso wie die Innenscheibe und die Außenscheibe. Eine keilartige Zwischenschicht würde dagegen im vertikalen Verlauf zwischen Unterkante und Oberkante der Verbundscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Verbundscheibe günstiger gestaltet.

Die elektrisch leitfähige Beschichtung umfasst erfindungsgemäß mindestens vier elektrisch leitfähige Schichten, wobei die Summe der Dicken aller elektrisch leitfähigen Schichten höchstens 30 nm beträgt. In einer bevorzugten Ausgestaltung beträgt die Summe der Dicken aller elektrisch leitfähiger Schichten von 15 nm bis 30 nm beträgt, bevorzugt von 20 nm bis 25 nm. Dicke oder Schichtdicke bezieht sich im Rahmen der vorliegenden Erfindung auf die geometrische Dicke, nicht etwa die optische Dicke, welche sich als Produkt aus Brechungsindex und geometrischer Dicke ergibt. Das ist besonders vorteilhaft im Hinblick auf die Kostenersparnis und die Anforderungen an das Reflexionsverhalten und weitere optische Eigenschaften können erfüllt werden. In einer besonders vorteilhaften Ausgestaltung beträgt die Anzahl der elektrisch leitfähigen Schichten genau vier. Komplexere Schichtaufbauten sind grundsätzlich nicht erforderlich, um die erforderlichen Spezifikationen der Beschichtungen zu erreichen. Mit vier elektrisch leitfähigen Schichten und der entsprechenden Anzahl an dielektrischen Schichten oder Schichtenfolgen stehen ausreichend Freiheitsgrade zur Verfügung, um die Beschichtung hinsichtlich Transmissions- und Reflexionsverhalten und Farbgebung zu optimieren.

Erfindungsgemäß weist mindestens eine, insbesondere genau eine der elektrisch leitfähigen Schichten eine Dicke von höchstens 5 nm auf, bevorzugt von 1 nm bis 3 nm auf, besonders bevorzugt von 1,5 nm bis 2,5 nm, insbesondere etwa 2 nm. Die übrigen elektrisch leitfähigen Schichten weisen bevorzugt jeweils eine Dicke von höchstens 10 nm auf, besonders bevorzugt von 5 nm bis 10 nm, ganz besonders bevorzugt von 6 nm bis 9 nm. Schichtdicken in den angegebenen Bereichen sind in besonderem Maße geeignet, die erforderlichen Spezifikationen der Beschichtung zu erreichen.

Durch die funktionellen, elektrisch leitfähigen Schichten wird die elektrische Leitfähigkeit der Beschichtung bewirkt. Durch die Aufteilung des gesamten leitenden Materials auf mehrere voneinander getrennte Schichten können diese jeweils dünner ausgestaltet werden, wodurch die Transparenz der Beschichtung erhöht wird. Jede elektrisch leitfähige Schicht enthält bevorzugt zumindest ein Metall oder eine Metalllegierung, beispielsweise Silber, Aluminium, Kupfer oder Gold, und ist besonders bevorzugt auf Basis des Metalls oder der Metalllegierung ausgebildet, das heißt besteht im Wesentlichen aus dem Metall oder der Metalllegierung abgesehen von etwaigen Dotierungen oder Verunreinigungen. Bevorzugt kommen Silber oder eine silberhaltige Legierung zum Einsatz. In einer vorteilhaften Ausgestaltung enthält die elektrisch leitfähige Schicht mindestens 90 Gew. % Silber, bevorzugt mindestens 99 Gew. % Silber, besonders bevorzugt mindestens 99,9 Gew. % Silber.

Zwischen den elektrisch leitfähigen Schichten sowie unterhalb der untersten leitfähigen Schicht und oberhalb der obersten leitfähigen Schicht sind erfindungsgemäß dielektrische Schichten oder Schichtenfolgen angeordnet. Jede dielektrische Schicht oder Schichtenfolge weist zumindest eine Entspiegelungsschicht auf. Die Entspiegelungsschichten senken die Reflexion von sichtbarem Licht und erhöhen somit die Transparenz der beschichteten Scheibe. Die Entspiegelungsschichten enthalten beispielsweise Siliziumnitrid (SiN), Silizium-Metall-Mischnitride wie Siliziumzirkoniumnitrid (SiZrN), Aluminiumnitrid (AIN) oder Zinnoxid (SnO). Die Entspiegelungsschichten können darüber hinaus Dotierungen aufweisen. Die Schichtdicke der einzelnen Entspiegelungsschichten beträgt bevorzugt von 10 nm bis 70 nm.

Die Entspiegelungsschichten können wiederum in mindestens zwei Teilschichten unterteilt sein, insbesondere in eine dielektrische Schicht mit einem Brechungsindex kleiner 2,1 und eine optisch hochbrechende Schicht mit einem Brechungsindex größer oder gleich 2,1. Bevorzugt ist zumindest eine zwischen zwei elektrisch leitfähigen Schichten angeordnete Entspiegelungsschicht derart unterteilt. Die Unterteilung der Entspiegelungsschicht führt zu einem geringeren Flächenwiderstand der elektrisch leitfähigen Beschichtung bei gleichzeitig hoher Transmission und hoher Farbneutralität. Die Reihenfolge der beiden Teilschichten kann grundsätzlich beliebig gewählt werden, wobei die optisch hochbrechende Schicht bevorzugt oberhalb der dielektrischen Schicht angeordnet ist, was im Hinblick auf den Flächenwiderstand besonders vorteilhaft ist. Die Dicke der optisch hochbrechenden Schicht beträgt bevorzugt von 10 % bis 99 %, besonders bevorzugt von 25% bis 75 % der Gesamtdicke der Entspiegelungsschicht, ganz besonders bevorzugt von 40 % bis 50 %. Entspiegelungsschichten, die in der angegeben Weise unterteilt sind, weisen bevorzugt Schichtdicken von 30 nm bis 70 nm auf, besonders bevorzugt von 40 nm bis 60 nm, ganz besonders bevorzugt von 50 nm bis 55 nm. Nicht unterteilte Entspiegelungsschichten weisen bevorzugt Schichtdicken von 10 nm bis 40 nm auf. In einer Ausgestaltung der Erfindung ist genau eine der zwischen zwei elektrisch leitfähigen Schichten angeordneten Entspiegelungsschichten in der angegebene Weise unterteilt in eine optisch hochbrechende Schicht mit Brechungsindex größer oder gleich 2,1 und eine dielektrische Schicht mit Brechungsindex kleiner 2,1, während die übrigen Entspiegelungsschichten als Einzelschichten ausgebildet sind.

Die optisch hochbrechende Schicht mit einem Brechungsindex größer oder gleich 2,1 enthält beispielsweise MnO, WO₃, Nb₂O₅, Bi₂O₃, TiO₂, Zr₃N₄ und / oder AIN, bevorzugt ein Silizium-Metall-Mischnitrid, beispielsweise Silizium-Aluminium-Mischnitrid, Silizium-Hafnium-Mischnitrid oder Silizium-Titan-Mischnitrid, besonders bevorzugt Silizium-Zirkonium-Mischnitrid (SiZrN). Das ist besonders vorteilhaft im Hinblick auf den Flächenwiderstand der elektrisch leitfähigen Beschichtung. Das Silizium-Zirkonium-Mischnitrid weist bevorzugt Dotierungen auf. Die Schicht eines optisch hochbrechenden Materials kann beispielsweise ein Aluminium-dotiertes Silizium-Zirkonium-Mischnitrid enthalten. Der Anteil an Zirkonium beträgt dabei bevorzugt zwischen 15 und 45 Gew.-%, besonders bevorzugt zwischen 15 und 30 Gew.-%.

Die dielektrische Schicht mit einem Brechungsindex kleiner 2,1 weist bevorzugt einen Brechungsindex n zwischen 1,6 und 2,1 auf, besonders bevorzugt zwischen 1,9 und 2,1. Die dielektrische Schicht enthält bevorzugt zumindest ein Oxid, beispielsweise Zinnoxid, und/oder ein Nitrid, besonders bevorzugt Siliziumnitrid.

In einer vorteilhaften Ausgestaltung weist eine oder weisen mehrere dielektrische Schichtenfolgen eine erste Anpassungsschicht auf, bevorzugt jede dielektrische Schichtenfolge, die unterhalb einer elektrisch leitfähigen Schicht angeordnet ist. Die erste Anpassungsschicht ist bevorzugt oberhalb der Entspiegelungsschicht angeordnet. Die erste Anpassungsschicht ist bevorzugt direkt unterhalb der elektrisch leitfähigen Schicht angeordnet, so dass sie direkten Kontakt zur leitfähigen Schicht hat. Das ist besonders vorteilhaft im Hinblick auf die Kristallinität der elektrisch leitfähigen Schicht.

In einer vorteilhaften Ausgestaltung weist eine oder weisen mehrere dielektrische Schichtenfolgen eine Glättungsschicht auf, bevorzugt jede dielektrische Schichtenfolge, die zwischen zwei elektrisch leitfähigen Schichten angeordnet ist. Die Glättungsschicht ist unterhalb einer der ersten Anpassungsschichten angeordnet, bevorzugt zwischen der Entspiegelungsschicht und der ersten Anpassungsschicht, falls eine solche erste Anpassungsschicht vorhanden ist. Die Glättungsschicht steht besonders bevorzugt in direktem Kontakt zur ersten Anpassungsschicht. Die Glättungsschicht bewirkt eine Optimierung, insbesondere Glättung der Oberfläche für eine anschließend oberhalb aufgebrachte elektrisch leitfähige Schicht. Eine auf eine glattere Oberfläche abgeschiedene elektrisch leitfähige Schicht weist einen höheren Transmissionsgrad bei einem gleichzeitig niedrigeren Flächenwiderstand auf. Die Schichtdicke einer Glättungsschicht beträgt bevorzugt von 3 nm bis 20 nm, besonders bevorzugt von 4 nm bis 12 nm, ganz besonders bevorzugt von 5 nm bis 10 nm, beispielsweise etwa 7 nm. Die Glättungsschicht weist bevorzugt einen Brechungsindex von kleiner als 2,2 auf.

Die Glättungsschicht enthält bevorzugt zumindest ein nichtkristallines Oxid. Das Oxid kann amorph oder teilamorph (und damit teilkristallin) sein, ist aber nicht vollständig kristallin. Die nichtkristalline Glättungsschicht weist eine geringe Rauheit auf und bildet somit eine vorteilhaft glatte Oberfläche für die oberhalb der Glättungsschicht aufzubringenden Schichten. Die nichtkristalline Glättungsschicht bewirkt weiter eine verbesserte Oberflächenstruktur der direkt oberhalb der Glättungsschicht abgeschiedenen Schicht, welche bevorzugt die erste Anpassungsschicht ist. Die Glättungsschicht kann beispielsweise zumindest ein Oxid eines oder mehrerer der Elemente Zinn, Silizium, Titan, Zirkonium, Hafnium, Zink, Gallium und Indium enthalten. Die Glättungsschicht enthält besonders bevorzugt ein nichtkristallines Mischoxid. Die Glättungsschicht enthält ganz besonders bevorzugt ein Zinn-Zink-Mischoxid (ZnSnO). Das Mischoxid kann Dotierungen aufweisen. Die Glättungsschicht kann beispielsweise ein Antimon-dotiertes Zinn-Zink-Mischoxid enthalten. Das Mischoxid weist bevorzugt einen unterstöchiometrischen Sauerstoffgehalt auf. Der Zinn Anteil beträgt dabei bevorzugt zwischen 10 und 40 Gew.-%, besonders bevorzugt zwischen 12 und 35 Gew.-%.

In einer vorteilhaften Ausgestaltung weist eine oder weisen mehrere dielektrische Schichtenfolgen eine zweite Anpassungsschicht auf, bevorzugt jede dielektrische Schichtenfolge, die oberhalb einer elektrisch leitfähigen Schicht angeordnet ist. Die zweite Anpassungsschicht ist bevorzugt unterhalb der Entspiegelungsschicht angeordnet.

Die ersten und die zweiten Anpassungsschichten bewirken eine Verbesserung des Flächenwiderstands der Beschichtung. Die erste Anpassungsschicht und/oder die zweite Anpassungsschicht enthält bevorzugt Zinkoxid ZnO_{1-δ} mit 0 ≤ δ ≤ 0,01. Die erste Anpassungsschicht und/oder die zweite Anpassungsschicht enthält weiter bevorzugt Dotierungen. Die erste Anpassungsschicht und/oder die zweite Anpassungsschicht kann beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Schichtdicken der ersten Anpassungsschicht und der zweiten Anpassungsschicht betragen bevorzugt von 3 nm bis 20 nm, besonders bevorzugt von 50 nm bis 15 nm, ganz besonders bevorzugt von 8 nm bis 12 nm, insbesondere etwa 10 nm.

In einer vorteilhaften Ausgestaltung umfasst die elektrisch leitfähige Beschichtung eine oder mehrere Blockerschichten. Bevorzugt ist mindestens einer, besonders bevorzugt jeder elektrisch leitfähigen Schicht mindestens eine Blockerschicht zugeordnet. Die Blockerschicht steht in direktem Kontakt zur elektrisch leitfähigen Schicht und ist unmittelbar oberhalb oder unmittelbar unterhalb der elektrisch leitfähigen Schicht angeordnet. Zwischen der elektrisch leitfähigen Schicht und der Blockerschicht ist also keine weitere Schicht angeordnet. Es kann auch jeweils eine Blockerschicht unmittelbar oberhalb und unmittelbar unterhalb einer leitfähigen Schicht angeordnet sein. Die Blockerschicht enthält bevorzugt Niob, Titan, Nickel, Chrom und/oder Legierungen davon, besonders bevorzugt Nickel-Chrom-Legierungen. Die Schichtdicke der Blockerschicht beträgt bevorzugt von 0,1 nm bis 2 nm, besonders bevorzugt von 0,1 nm bis 1 nm. Eine Blockerschicht unmittelbar unterhalb der elektrisch leitfähigen Schicht dient insbesondere zur Stabilisierung der elektrisch leitfähigen Schicht während einer Temperaturbehandlung und verbessert die optische Qualität der elektrisch leitfähigen Beschichtung. Eine Blockerschicht unmittelbar oberhalb der elektrisch leitfähigen Schicht verhindert den Kontakt der empfindlichen elektrisch leitfähigen Schicht mit der oxidierenden reaktiven Atmosphäre während der Abscheidung der folgenden Schicht durch reaktive Kathodenzerstäubung, beispielsweise der zweiten Anpassungsschicht.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird. Die angegebenen Werte für Brechungsindizes sind bei einer Wellenlänge von 550 nm gemessen.

In einer vorteilhaften Ausgestaltung ist jeweils zwischen zwei elektrisch leitfähigen Schichten (21) eine dielektrische Schichtenfolge angeordnet, welche umfasst:
- eine Entspiegelungsschicht (22) auf Basis von Siliziumnitrid (SiN), Silizium-Metall-Mischnitride wie Siliziumzirkoniumnitrid (SiZrN), Aluminiumnitrid (AIN) oder Zinnoxid (SnO),
- eine Glättungsschicht (23) auf Basis eines Oxids eines oder mehrerer der Elemente Zinn, Silizium, Titan, Zirkonium, Hafnium, Zink, Gallium und Indium,
- eine erste und eine zweite Anpassungsschicht (24, 25) auf Basis von Zinkoxid und
- optional eine Blockerschicht (26) auf Basis von Niob, Titan, Nickel, Chrom und/oder Legierungen davon. Eine bestimmte Reihenfolge der Schichten wird dabei nicht vorausgesetzt. Unterhalb der untersten leitfähigen Schicht und oberhalb der obersten leitfähigen Schicht ist bevorzugt eine Entspiegelungsschichtung und eine Anpassungsschicht angeordnet auf Basis der vorstehend genannten bevorzugten Materialien.

Die elektrisch leitfähige Beschichtung mit den erfindungsgemäßen Reflexionscharakteristika ist grundsätzlich auf verschiedene Arten realisierbar, bevorzugt unter Verwendung der vorstehend beschriebenen Schichten, so dass die Erfindung nicht auf eine bestimmte Schichtenfolge eingeschränkt ist. Nachfolgend wird eine besonders bevorzugte Ausgestaltung der Beschichtung vorgestellt, mit der besonders gute Ergebnisse erzielt werden, insbesondere bei einem typischen Einfallswinkel der Strahlung von etwa 65°.

Eine besonders bevorzugte Ausgestaltung der elektrisch leitfähigen Beschichtung enthält ausgehend vom Substrat folgende Schichtenfolge, oder besteht aus dieser:
- eine Entspiegelungsschicht mit einer Dicke von 15 nm bis 25 nm, bevorzugt von18 nm bis 23 nm, bevorzugt auf Basis von Siliziumnitrid,
- eine erste Anpassungsschicht mit einer Dicke von 5 nm bis 15 nm, bevorzugt von 8 nm bis 12 nm, bevorzugt auf Basis von Zinkoxid,
- eine elektrisch leitfähige Schicht auf Basis von Silber mit einer Dicke von 4 nm bis 8 nm,
- optional eine Blockerschicht mit einer Dicke von 0,1 nm bis 0,5 nm, bevorzugt auf Basis von NiCr,
- eine zweite Anpassungsschicht mit einer Dicke von 5 nm bis 15 nm, bevorzugt von 8 nm bis 12 nm, bevorzugt auf Basis von Zinkoxid,

- eine Entspiegelungsschicht mit einer Dicke von 15 nm bis 25 nm, bevorzugt von 18 nm bis 23 nm, bevorzugt auf Basis eines Silizium-Metall-Mischnitrids wie Siliziumzirkoniumnitrid oder Siliziumhafniumnitrid,
- eine Glättungsschicht mit einer Dicke von 5 nm bis 10 nm, bevorzugt auf Basis Zinn-Zink-Mischoxid,
- eine erste Anpassungsschicht mit einer Dicke von 5 nm bis 15 nm, bevorzugt von 8 nm bis 12 nm, bevorzugt auf Basis von Zinkoxid,
- eine elektrisch leitfähige Schicht auf Basis von Silber mit einer Dicke von 7 nm bis 10 nm,
- optional eine Blockerschicht mit einer Dicke von 0,1 nm bis 0,5 nm, bevorzugt auf Basis von NiCr,
- eine zweite Anpassungsschicht mit einer Dicke von 5 nm bis 15 nm, bevorzugt von 8 nm bis 12 nm, bevorzugt auf Basis von Zinkoxid,
- eine Entspiegelungsschicht mit einer Dicke von 5 nm bis 20 nm, bevorzugt von 10 nm bis 15 nm, bevorzugt auf Basis eines Silizium-Metall-Mischnitrids wie Siliziumzirkoniumnitrid oder Siliziumhafniumnitrid,
- eine Glättungsschicht mit einer Dicke von 5 nm bis 10 nm, bevorzugt auf Basis Zinn-Zink-Mischoxid,
- eine erste Anpassungsschicht mit einer Dicke von 5 nm bis 15 nm, bevorzugt von 8 nm bis 12 nm, bevorzugt auf Basis von Zinkoxid,
- eine elektrisch leitfähige Schicht auf Basis von Silber mit einer Dicke von 1 nm bis 3 nm,
- optional eine Blockerschicht mit einer Dicke von 0,1 nm bis 0,5 nm, bevorzugt auf Basis von NiCr,
- eine zweite Anpassungsschicht mit einer Dicke von 5 nm bis 15 nm, bevorzugt von 8 nm bis 12 nm, bevorzugt auf Basis von Zinkoxid,

- eine Entspiegelungsschicht mit einer Dicke von 45 nm bis 60 nm, bevorzugt von 50 nm bis 55 nm, bevorzugt unterteilt in eine dielektrische Schicht auf Basis von Siliziumnitrid mit einer Dicke von 25 nm bis 35 nm, bevorzugt von 28 nm bis 32 nm, und eine optisch hochbrechende Schicht auf Basis eines Silizium-Metall-Mischnitrids wie Siliziumzirkoniumnitrid oder Siliziumhafniumnitrid mit einer Dicke von 15 nm bis 30nm, bevorzugt 20 nm bis 25 nm,
- eine Glättungsschicht mit einer Dicke von 5 nm bis 10 nm, bevorzugt auf Basis Zinn-Zink-Mischoxid,
- eine erste Anpassungsschicht mit einer Dicke von 5 nm bis 15 nm, bevorzugt von 8 nm bis 12 nm, bevorzugt auf Basis von Zinkoxid,
- eine elektrisch leitfähige Schicht auf Basis von Silber mit einer Dicke von 5 nm bis 8 nm,
- optional eine Blockerschicht mit einer Dicke von 0,1 nm bis 0,5 nm, bevorzugt auf Basis von NiCr,
- eine zweite Anpassungsschicht mit einer Dicke von 5 nm bis 15 nm, bevorzugt von 8 nm bis 12 nm, bevorzugt auf Basis von Zinkoxid,

- eine Entspiegelungsschicht mit einer Dicke von 30 nm bis 50 nm, bevorzugt von 35 nm bis 40 nm, bevorzugt auf Basis eines Silizium-Metall-Mischnitrids wie Siliziumzirkoniumnitrid oder Siliziumhafniumnitrid.

Eine ganz besonders bevorzugte Ausgestaltung der elektrisch leitfähigen Beschichtung enthält ausgehend vom Substrat folgende Schichtenfolge, oder besteht aus dieser:
- eine Entspiegelungsschicht auf Basis von Siliziumnitrid mit einer Dicke von 20 nm bis 22 nm,
- eine erste Anpassungsschicht auf Basis von Zinkoxid mit einer Dicke von 9 nm bis 11 nm,
- eine elektrisch leitfähige Schicht auf Basis von Silber mit einer Dicke von 5 nm bis 7 nm,
- optional eine Blockerschicht auf Basis von NiCr mit einer Dicke von 0,1 nm bis 0,3 nm,
- eine zweite Anpassungsschicht auf Basis von Zinkoxid mit einer Dicke von 9 nm bis 11 nm,

- eine Entspiegelungsschicht auf Basis eines Silizium-Metall-Mischnitrids wie Siliziumzirkoniumnitrid oder Siliziumhafniumnitrid mit einer Dicke von 20 nm bis 22 nm,
- eine Glättungsschicht auf Basis Zinn-Zink-Mischoxid mit einer Dicke von 6 nm bis 8 nm,
- eine erste Anpassungsschicht auf Basis von Zinkoxid mit einer Dicke von 9 nm bis 11 nm,
- eine elektrisch leitfähige Schicht auf Basis von Silber mit einer Dicke von 7,5 nm bis 9,5 nm,
- optional eine Blockerschicht auf Basis von NiCr mit einer Dicke von 0,1 nm bis 0,3 nm,
- eine zweite Anpassungsschicht auf Basis von Zinkoxid mit einer Dicke von 9 nm bis 11 nm,

- eine Entspiegelungsschicht auf Basis eines Silizium-Metall-Mischnitrids wie Siliziumzirkoniumnitrid oder Siliziumhafniumnitrid mit einer Dicke von 12 nm bis 14 nm,
- eine Glättungsschicht auf Basis Zinn-Zink-Mischoxid mit einer Dicke von 6 nm bis 8 nm,
- eine erste Anpassungsschicht auf Basis von Zinkoxid mit einer Dicke von 9 nm bis 11 nm,
- eine elektrisch leitfähige Schicht auf Basis von Silber mit einer Dicke von 1 nm bis 3 nm,
- optional eine Blockerschicht auf Basis von NiCr mit einer Dicke von 0,1 nm bis 0,3 nm,
- eine zweite Anpassungsschicht auf Basis von Zinkoxid mit einer Dicke von 9 nm bis 11 nm,

- eine Entspiegelungsschicht, unterteilt in eine dielektrische Schicht auf Basis von Siliziumnitrid mit einer Dicke von 29 nm bis 31 nm und eine optisch hochbrechende Schicht auf Basis eines Silizium-Metall-Mischnitrids wie Siliziumzirkoniumnitrid oder Siliziumhafniumnitrid mit einer Dicke von 22,5 nm bis 24,5 nm,
- eine Glättungsschicht auf Basis Zinn-Zink-Mischoxid mit einer Dicke von 6 nm bis 8 nm,
- eine erste Anpassungsschicht auf Basis von Zinkoxid mit einer Dicke von 9 nm bis 11 nm,
- eine elektrisch leitfähige Schicht auf Basis von Silber mit einer Dicke von 5,5 nm bis 7,5 nm,
- optional eine Blockerschicht auf Basis von NiCr mit einer Dicke von 0,1 nm bis 0,3 nm,
- eine zweite Anpassungsschicht auf Basis von Zinkoxid mit einer Dicke von 9 nm bis 11 nm,
- eine Entspiegelungsschicht auf Basis eines Silizium-Metall-Mischnitrids wie Siliziumzirkoniumnitrid oder Siliziumhafniumnitrid mit einer Dicke von 36 nm bis 38 nm.

Ist eine Schicht auf Basis eines Materials ausgebildet, so besteht die Schicht mehrheitlich aus diesem Material neben etwaigen Verunreinigungen oder Dotierungen.

Der Flächenwiderstand der elektrisch leitfähigen Beschichtung beträgt bevorzugt von 1 Ω/□ bis 2 Ω/□. Ein solcher Flächenwiderstand kann mit der erfindungsgemäßen Beschichtung unter Gewährleistung der gewünschten optischen Eigenschaften problemlos erreicht werden.

In einer Ausgestaltung der Erfindung ist die elektrisch leitfähige Beschichtung an eine Spannungsquelle angeschlossen, um einen elektrischen Strom durch die Beschichtung zu leiten, welche sich dadurch erwärmt. Die Verbundscheibe kann so beheizt werden. Als Spannungen kommen insbesondere im Fahrzeugbereich übliche Bordspannungen in Betracht, beispielsweise 12 V bis 14 V. Es hat sich gezeigt, dass mit der erfindungsgemäßen Beschichtung besonders dann gute Heizleistungen erreicht werden, wenn sie an eine Spannungsquelle von 40 V bis 50 V angeschlossen wird, wie sie insbesondere bei Elektrofahrzeugen üblich sind, beispielsweise 42 V oder 48 V. Damit können bei typischen Scheibengrößen für HUDs Heizleistungen von 1500 W/m² bis 5000 W/m² erreicht werden, insbesondere 2200 W/m² bis 3000 W/m², was dafür geeignet ist, die Verbundscheibe schnell von kondensierter Feuchtigkeit oder Vereisung zu befreien. Zum Anschluss an die Spannungsquelle ist die Beschichtung bevorzugt mit Stromsammelschienen *(Busbars)* versehen, welche mit den Polen der Spannungsquelle verbindbar sind, um über einen möglichst großen Teil der Scheibenbreite Strom in die Beschichtung einzuleiten. Die Stromsammelschienen können beispielsweise als aufgedruckte und eingebrannte Leiter ausgebildet sein, typischerweise in Form einer gebrannten Siebdruckpaste mit Glasfritten und Silberpartikeln. Alternativ können aber auch Streifen einer elektrisch leitfähigen Folie als Sammelleiter verwendet werden, die auf die Beschichtung aufgelegt oder aufgeklebt werden, beispielsweise Kupferfolie oder Aluminiumfolie. Typischerweise sind die beiden Sammelleiter in der Nähe zweier einander gegenüberliegender Seitenkanten der Verbundscheibe positioniert, beispielsweise der Ober- und Unterkante.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch das Verbundglas beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein. Es muss sichergestellt werden, dass die elektrisch leitfähige Beschichtung die Gesamttransmission nicht zu stark herabsetzt.

Neben der Gesamttransmission sollte die Verbundscheibe auch eine möglichst neutrale außenseitige Reflexionsfarbe aufweisen, um für den Benutzer ästhetisch ansprechend zu sein. Die Reflexionsfarbe wird typischerweise im La*b*-Farbraum charakterisiert, bei Einstrahlwinkeln von 8° und 60° zur außenseitigen Flächennormalen unter Verwendung einer Lichtquelle D65 und einem Beobachtungswinkel von 10°. Es hat sich gezeigt, dass mit der erfindungsgemäßen Beschichtung Verbundscheiben ohne allzu großen Farbstich realisiert werden können. Bei einem Einstrahlwinkel von 8° beträgt der a*-Wert bevorzugt von -4 bis 0 und der b*-Wert von -13 bis -3. Bei einem Einstrahlwinkel von 60° beträgt der a*-Wert bevorzugt von -2 bis 2 und der b*-Wert von -9 bis 1. Solche Scheiben weisen einen ausreichend unauffälligen Farbstich auf, um von der Autoindustrie akzeptiert zu werden.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm.

Die Verbundscheibe wird kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die elektrisch leitfähige Beschichtung wird bevorzugt durch physikalische Gasphasenabscheidung (PVD) auf die Innenscheibe aufgebracht, besonders bevorzugt durch Kathodenzerstäubung ("Sputtern"), ganz besonders bevorzugt durch magnetfeldunterstütze Kathodenzerstäubung. Die Beschichtung werden bevorzugt vor der Lamination auf die Scheiben aufgebracht. Statt die elektrisch leitfähige Beschichtung auf eine Scheibenoberfläche aufzubringen, kann sie grundsätzlich auch auf einer Trägerfolie bereitgestellt werden, die in der Zwischenschicht angeordnet wird.

Soll die Verbundscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der leitfähigen Beschichtung.

Die Erfindung umfasst außerdem die Verwendung einer erfindungsgemäß ausgebildeten Verbundscheibe als Projektionsfläche einer Projektionsanordnung für ein Head-Up-Display, wobei ein Projektor auf den HUD-Bereich gerichtet ist, dessen Strahlung p-polarisiert ist. Die vorstehend beschriebenen bevorzugten Ausgestaltungen gelten für die Verwendung entsprechend.

Die Erfindung umfasst weiter die Verwendung einer erfindungsgemäßen Projektionsanordnung als HUD in einem Kraftfahrzeug, insbesondere einem Personenkraftwagen oder Lastkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer gattungsgemäßen Projektionsanordnung,
- Fig. 2: einen Querschnitt durch eine gattungsgemäße Projektionsanordnung,
- Fig. 3: einen Querschnitt durch eine Verbundscheibe einer erfindungsgemäßen Projektionsanordnung,
- Fig. 4: einen Querschnitt durch eine erfindungsgemäße elektrisch leitfähige Beschichtung und
- Fig. 5: Reflexionsspektrum gegenüber p-polarisierter Strahlung einer Verbundscheibe mit einer erfindungsgemäßen elektrisch leitfähigen Beschichtung und einer Verbundscheibe mit einer herkömmlichen elektrisch leitfähigen Beschichtung.

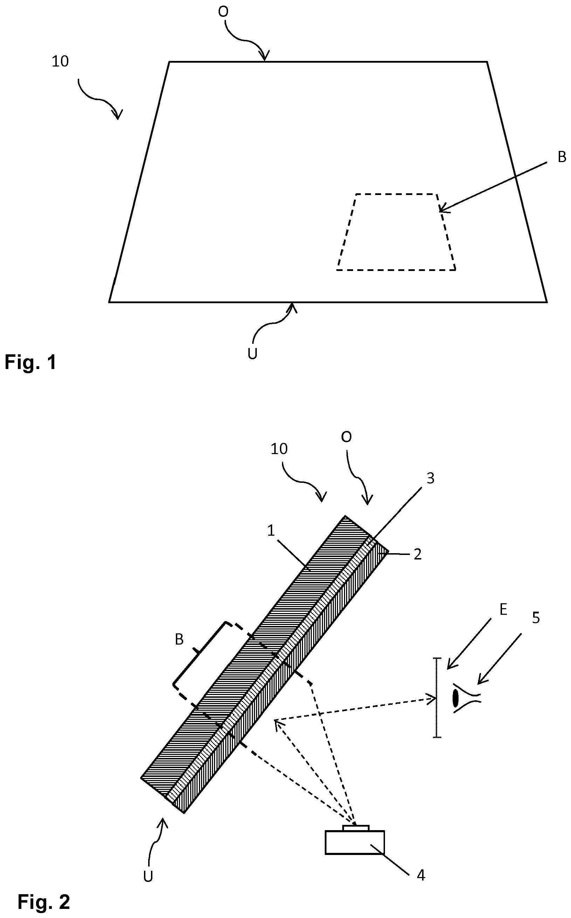

Fig. 1 und Fig. 2 zeigen je ein Detail einer gattungsgemäßen Projektionsanordnung für ein HUD. Die Projektionsanordnung umfasst eine Verbundscheibe 10, insbesondere die Windschutzscheibe eines Personenkraftwagens. Die Projektionsanordnung umfasst außerdem einen Projektor 4, welcher auf einen Bereich B der Verbundscheibe 10 gerichtet ist. In dem Bereich B, der üblicherweise als HUD-Bereich bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Verbundscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum.

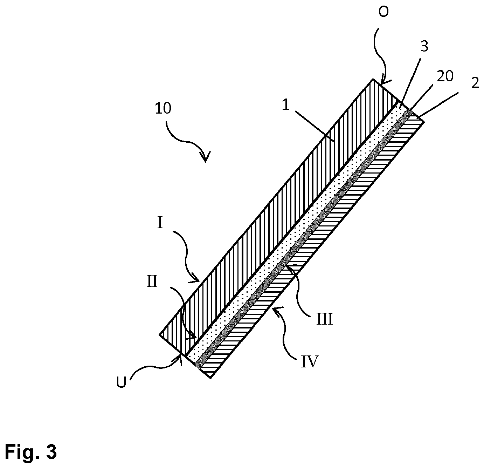

Fig. 3 zeigt eine Ausgestaltung einer erfindungsgemäß ausgebildeten Verbundscheibe 10. Die Außenscheibe 1 weist eine außenseitige Oberfläche 1 auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit.

Die außenseitige Oberfläche III der Innenscheibe 2 ist mit einer erfindungsgemäßen elektrisch leitfähigen Beschichtung 20 versehen, die als Reflexionsfläche für die Projektorstrahlung und zusätzlich beispielsweise als IR-reflektierende Beschichtung oder als beheizbare Beschichtung vorgesehen ist.

Der Strahlung des Projektors 4 ist erfindungsgemäß p-polarisiert, insbesondere im Wesentlichen rein p-polarisiert. Da der Projektor 4 die Verbundscheibe 10 mit einem Einfallswinkel von etwa 65° bestrahlt, der nahe dem Brewster-Winkel liegt, wird die Strahlung des Projektors nur unwesentlich an den externen Oberflächen I, IV der Verbundscheibe 10 reflektiert. Die erfindungsgemäße elektrisch leitfähige Beschichtung 20 dagegen ist auf die Reflexion p-polarisierter Strahlung optimiert. Sie dient als Reflexionsfläche für die Strahlung des Projektors 4 zur Erzeugung der HUD-Projektion.

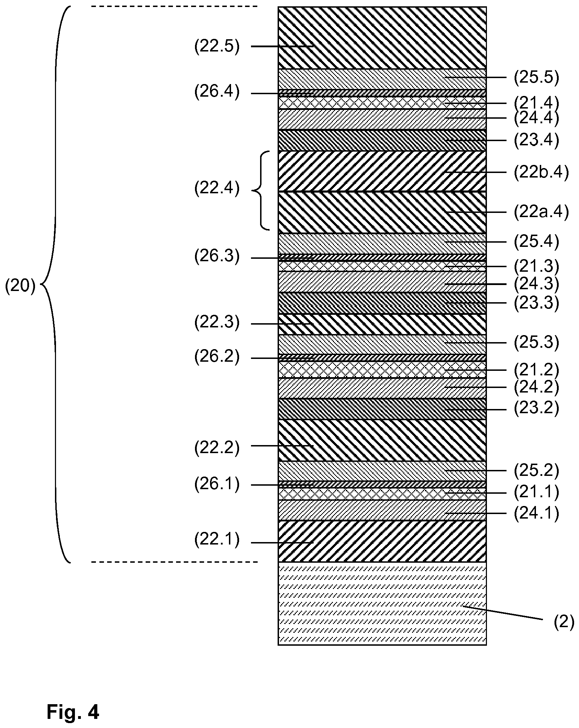

Fig. 4 zeigt die Schichtenfolge einer erfindungsgemäßen elektrisch leitfähigen Beschichtung 20. Die Beschichtung 20 enthält vier elektrisch leitfähige Schichten 21 (21.1, 21.2, 21.3, 21.4). Jede elektrisch leitfähige Schicht 21 ist jeweils zwischen zwei von insgesamt fünf Entspiegelungsschichten 22 (22.1, 22.2, 22.3, 22.4, 22.5) angeordnet. Die Entspiegelungsschichten 22.1, 22.2, 22.3, 22.5 sind jeweils als eine einzelne Schicht ausgebildet, während die Entspiegelungsschicht 22.4 unterteilt ist in eine dielektrische Schicht 22a.4 und eine optisch hochbrechende Schicht 22b.4. Die Beschichtung 20 enthält außerdem drei Glättungsschichten 23 (23.2, 23.3, 23.4), vier ersten Anpassungsschichten 24 (24.1, 24.2, 24.3, 24.4), vier zweite Anpassungsschichten 25 (25.2, 25.3, 25.4, 25.5) und vier Blockerschichten 26 (26.1, 26.2, 26.3, 26.4).

Die Schichtenabfolge ist schematisch der Figur zu entnehmen. Die Schichtenfolge einer Verbundscheibe 10 mit der Beschichtung 20 auf der außenseitigen Oberfläche III der Innenscheibe 2 ist außerdem, zusammen mit den Materialien und Schichtdicken der Einzelschichten, in Tabelle 1 dargestellt (Beispiel). Tabelle 1 zeigt außerdem die Schichtenfolge einer elektrisch leitfähigen Beschichtung, wie sie aktuell bereits in Verwendung ist (Vergleichsbeispiel). Die Materialien der Schichten können Dotierungen aufweisen, die in der Tabelle nicht angegeben sind. So können beispielsweise Schichten auf Basis von SnZnO mit Antimon dotiert sein und Schichten auf Basis von ZnO, SiN oder SiZrN mit Aluminium.

Der Vergleich des Beispiels mit dem Vergleichsbeispiel macht deutlich, dass sich die erfindungsgemäße Beschichtung 20 insbesondere durch wesentlich dünnere elektrisch leitfähige Schichten 21 auszeichnet. Dadurch ist die erfindungsgemäße Beschichtung 20 kostengünstiger abzuscheiden. Die Leitfähigkeit ist dennoch ausreichend hoch, um die erfindungsgemäße Beschichtung 20 als beheizbare Beschichtung zu verwenden, insbesondere in Verbindung mit Speisespannungen von 40 V bis 50 V. Die gewünschten Reflexionseigenschaften, der gewünschte Flächenwiderstand und sonstige optische Eigenschaften wird durch geeignete Ausgestaltung der dielektrischen Schichten eingestellt.

**Tabelle 1**

| Bezugszeichen | | | Materialien und Schichtdicken | | | |
|---|---|---|---|---|---|---|
| | | | Beispiel | | Vergleichsbeispiel | |
| 1 | | | Glas | 2,1 mm | Glas | 2,1 mm |
| 3 | | | PVB | 0,76 mm | PVB | 0,76 mm |
| 20 | 22.5 | | SiZrN | 36,8 nm | SiZrN | 52,2 nm |
| | 25.5 | | ZnO | 10,0 nm | ZnO | 10,0 nm |
| | 26.4 | | NiCr | 0,1 nm | NiCr | 0,2 nm |
| | 21.4 | | **Ag** | 6,6 nm | **Ag** | 14,1 nm |
| | 24.4 | | ZnO | 10,0 nm | ZnO | 10,0 nm |
| | 23.4 | | SnZnO | 7,0 nm | SnZnO | 7,0 nm |
| | 22b.4 | 22.4 | SiZrN | 23,5 nm | SiZrN | 22,9 nm |
| | 22a.4 | | SiN | 29,8 nm | SiN | 29,8 nm |
| | 25.4 | | ZnO | 10,0 nm | ZnO | 10,0 nm |
| | 26.3 | | NiCr | 0,1 nm | NiCr | 0,2 nm |
| | 21.3 | | **Ag** | 2,0 nm | **Ag** | 14,2 nm |
| | 24.3 | | ZnO | 10,0 nm | ZnO | 10,0 nm |
| | 23.3 | | SnZnO | 7,0 nm | SnZnO | 7,0 nm |
| | 22b.3 | 22.3 | SiZrN | 12,9 nm | SiZrN | 20,1 nm |
| | 22a.3 | | - | - | SiN | 29,6 nm |
| | 25.3 | | ZnO | 10,0 nm | ZnO | 10,0 nm |
| | 26.2 | | NiCr | 0,1 nm | NiCr | 0,2 nm |
| | 21.2 | | **Ag** | 8,5 nm | **Ag** | 17,1 nm |
| | 24.2 | | ZnO | 10,0 nm | ZnO | 10,0 nm |
| | 23.2 | | SnZnO | 7,0 nm | SnZnO | 7,0 nm |
| | 22b.2 | 22.2 | SiZrN | 20,4 nm | SiZrN | 19,4 nm |
| | 22a.2 | | - | - | SiN | 34,1 nm |
| | 25.2 | | ZnO | 10,0 nm | ZnO | 10,0 nm |
| | 26.1 | | NiCr | 0,1 nm | NiCr | 0,2 nm |
| | 21.1 | | **Ag** | 6,0 nm | **Ag** | 11,7 nm |
| | 24.1 | | ZnO | 10,0 nm | ZnO | 10,0 nm |
| | 22.1 | | SiN | 20,6 nm | SiN | 28,8 nm |
| 2 | | | Glas | 1,6 mm | Glas | 1,6 nm |

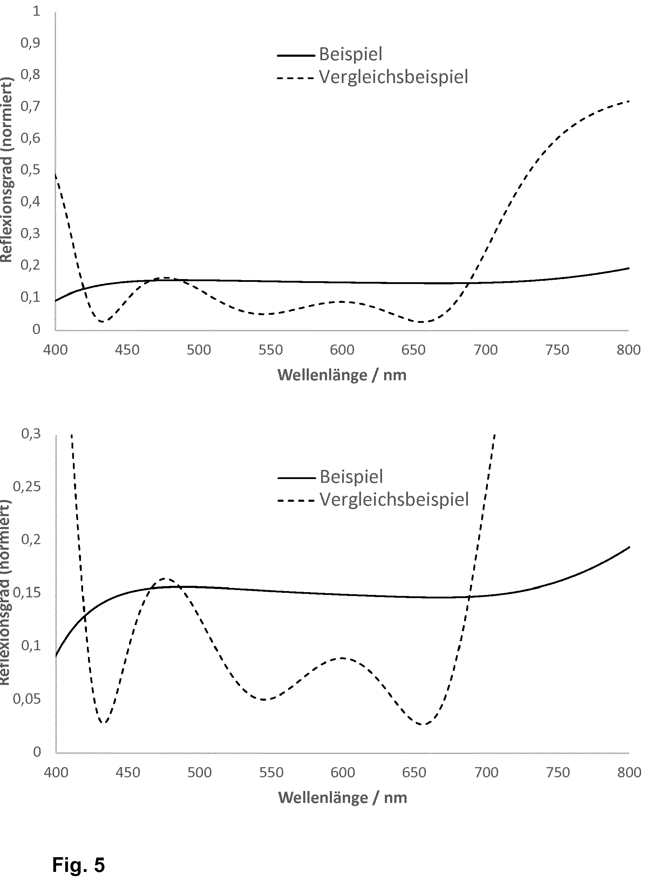

Fig. 5 zeigt das Reflexionsspektrum einer Verbundscheibe 10 mit einer herkömmlichen leitfähigen Beschichtung 20 gemäß dem Vergleichsbeispiel und einer erfindungsgemäßen leitfähigen Beschichtung 20 gemäß dem Beispiel (vgl. Tabelle 1) für p-polarisierte Strahlung. Die Spektren wurden innenraumseitig gemessen unter einem Einfallswinkel von 65°, bildet also das Reflexionsverhalten für den HUD-Projektor nach. Die beiden Darstellungen der Figur unterscheiden sich lediglich in der Skalierung der Ordinate.

Der Vergleich der Spektren macht deutlich, dass das erfindungsgemäße Beispiel zum einen eine höhere durchschnittliche Reflexion im relevanten Spektralbereich aufweist und zum anderen deutlich glatter ist als das Vergleichsbeispiel. Dadurch wird eine intensitätsstärkere und farbneutralere Darstellung der HUD-Projektion erreicht.

Der Reflexionsgrad beträgt für das Beispiel im gesamten Spektralbereich von 450 nm bis 650 nm mindestens 15%, während für das Vergleichsbeispiel auch Werte von lediglich 3% auftreten. Die gleiche Beobachtung trifft auf die Spektralbereiche von 450 nm bis 700 nm und von 450 nm bis 800 nm zu.

Für das Beispiel beträgt die Differenz zwischen dem maximal auftretenden Reflexionsgrad und dem Mittelwert des Reflexionsgrades 1% und die Differenz zwischen dem minimal auftretenden Reflexionsgrad und dem Mittelwert des Reflexionsgrades 0% im Spektralbereich von 450 nm bis 650 nm. Für das Vergleichsbeispiel betragen die entsprechenden Werte 7 % bzw. 6%.

Für das Beispiel beträgt die Differenz zwischen dem maximal auftretenden Reflexionsgrad und dem Mittelwert des Reflexionsgrades 0% und die Differenz zwischen dem minimal auftretenden Reflexionsgrad und dem Mittelwert des Reflexionsgrades 1 % im Spektralbereich von 450 nm bis 700 nm. Für das Vergleichsbeispiel betragen die entsprechenden Werte 6 % bzw. 16%.

Für das Beispiel beträgt die Differenz zwischen dem maximal auftretenden Reflexionsgrad und dem Mittelwert des Reflexionsgrades 1% und die Differenz zwischen dem minimal auftretenden Reflexionsgrad und dem Mittelwert des Reflexionsgrades 3% im Spektralbereich von 450 nm bis 800 nm. Für das Vergleichsbeispiel betragen die entsprechenden Werte 20 % bzw. 49%.

In Tabelle 3 sind einige optische Werte der erfindungsgemäßen Verbundscheibe (Beispiel gemäß Tabelle 1) angegeben, die dem Fachmann geläufig sind und üblicherweise zur Charakterisierung von Fahrzeugscheiben herangezogen werden. Dabei stehen RL für die integrierte Lichtreflexion und TL für die integrierte Lichttransmission (nach ISO 9050). Die Angabe nach RL beziehungsweise TL gibt die verwendete Lichtquelle an, wobei A für die Lichtquelle A steht und HUD für einen HUD-Projektor mit Strahlungswellenlängen von 473 nm, 550 nm und 630 nm (RGB). Die Winkelangabe nach der Lichtart gibt den Einfallswinkel der Strahlung zur außenseitigen Flächennormalen an. Einfallswinkel kleiner 90° geben also eine außenseitige Bestrahlung an und Einfallswinkel größer 90° eine innenraumseitige Bestrahlung. Der angegebene Einfallswinkel von 115° entspricht einem Einfallswinkel zur innenraumseitigen Flächennormalen von 65° (=180°-115°) und simuliert die Bestrahlung mit dem erfindungsgemäßen Projektor. Unterhalb der Reflexionswerte sind jeweils die zugehörigen Farbwerte a* und b* im L*a*b*-Farbraum, gefolgt von der Angabe der verwendeten Lichtquelle (Lichtquelle D65 und HUD-Projektor) und der Angabe des Beobachtungswinkels (Winkel, unter dem der Lichtstrahl ins Auge auf die Netzhaut trifft).

TTS ISO 13837 steht für die insgesamt eingestrahlte Sonnenenergie, gemessen nach ISO 13837, und ist ein Maß für den thermischen Komfort.

Die Verbundscheibe weist eine ausreichende Gesamttransmission auf, um als Windschutzscheibe verwendet zu werden. Die innenraumseitige Reflexion hinsichtlich der p-polarisierten HUD-Projektorstrahlung ist ausreichend hoch, um eine intensitätsstarke HUD-Projektion zu gewährleisten. Gleichzeitig ist die außenseitige Reflexionsfarbe relativ neutral, so dass die Verbundscheibe keinen unangenehmen Farbstich aufweist.

Der Flächenwiderstand der Beschichtung 20 betrug 1,5 Ω/□, so dass mit einer Speisespannung von beispielsweise 42 V und einer typischen Windschutzscheibenhöhe (Abstand der Busbars) eine Heizleistung von etwa 2300 W/m² erreicht werden kann.

**Tabelle 3**

| | | Beispiel |
|---|---|---|
| RLA8° /% | | 16,9 |
| | a* (D65 /10°) | -2,0 |
| | b* (D65 /10°) | -5,0 |
| RLA60° /% | | 22,3 |
| | a* (D65 /10°) | 1,1 |
| | b* (D65 /10°) | -2,6 |
| RL HUD p-pol. 115° / % | | 15,2 |
| | a* (HUD /10°) | -1,0 |
| | b* (HUD /10°) | 0,2 |
| TLA0° /% | | 71,6 |
| TTS ISO 13837 / % | | 53,4 |

### Bezugszeichenliste:

(10) Verbundscheibe

(1) Außenscheibe
(2) Innenscheibe
(3) thermoplastische Zwischenschicht
(4) Projektor
(5) Betrachter/ Fahrzeugfahrer

(20) elektrisch leitfähige Beschichtung
(21) elektrisch leitfähige Schicht
(21.1), (21.2), (21.3), (21.4) 1., 2., 3., 4. elektrisch leitfähige Schicht
(22) Entspiegelungsschicht
(22.1), (22.2), (22.3), (22.4), (22.5) 1., 2., 3., 4., 5. Entspiegelungsschicht
(22a) dielektrische Schicht der Entspiegelungsschicht 4
(22a.2), (22a.3), (22a.4) 1., 2., 3. dielektrische Schicht
(22b) optisch hochbrechende Schicht der Entspiegelungsschicht 4
(22b.2), (22b.3), (22b.4) 1., 2., 3. optisch hochbrechende Schicht
(23) Glättungsschicht
(23.2), (23.3), (23.4) 1., 2., 3. Glättungsschicht
(24) erste Anpassungsschicht
(24.1), (24.2), (24.3), (24.4) 1., 2., 3., 4. erste Anpassungsschicht
(25) zweite Anpassungsschicht
(25.2), (25.3), (25.4), (25.5) 1., 2., 3., 4. zweite Anpassungsschicht
(26) Blockerschicht
(26.1), (26.2), (26.3), (26.4) 1., 2., 3., 4. Blockerschicht

(O) Oberkante der Verbundscheibe 10
(U) Unterkante der Verbundscheibe 10
(B) HUD-Bereich der Verbundscheibe 10
(E) Eyebox

(I) außenseitige, von der Zwischenschicht 3 abgewandte Oberfläche der Außenscheibe 1
(II) innenraumseitige, zur Zwischenschicht 3 hingewandte Oberfläche der Außenscheibe 1
(III) außenseitige, zur Zwischenschicht 3 hingewandte Oberfläche der Innenscheibe 2
(IV) innenraumseitige, von der Zwischenschicht 3 abgewandte Oberfläche der Innenscheibe 2

## Patentansprüche

1. Projektionsanordnung für ein Head-Up-Display (HUD), mindestens umfassend
- eine Verbundscheibe (10), umfassend eine Außenscheibe (1) und eine Innenscheibe (2), die über eine thermoplastische Zwischenschicht (3) miteinander verbunden sind, mit einem HUD-Bereich (B);
- eine elektrisch leitfähige Beschichtung (20) auf der zur Zwischenschicht (3) hingewandten Oberfläche (II, III) der Außenscheibe (1) oder der Innenscheibe (2) oder innerhalb der Zwischenschicht (3); und
- einen Projektor (4), der auf den HUD-Bereich (B) gerichtet ist;
wobei die Strahlung des Projektors (4) p-polarisiert ist,
wobei die Verbundscheibe (10) mit der elektrisch leitfähigen Beschichtung (20) im gesamten Spektralbereich von 450 nm bis 650 nm einen Reflexionsgrad gegenüber p-polarisierter Strahlung von mindestens 10% aufweist und
wobei die elektrisch leitfähige Beschichtung (20) mindestens vier elektrisch leitfähige Schichten (21) umfasst, welche jeweils zwischen zwei dielektrischen Schichten oder Schichtenfolgen angeordnet sind,
wobei die Summe der Dicken aller elektrisch leitfähigen Schichten (21) höchstens 30 nm beträgt und wobei mindestens eine der elektrisch leitfähigen Schichten (21) eine Dicke von höchstens 5 nm aufweist.

2. Projektionsanordnung nach Anspruch 1, wobei die Verbundscheibe (10) mit der elektrisch leitfähigen Beschichtung (20) im gesamten Spektralbereich von 450 nm bis 650 nm einen Reflexionsgrad gegenüber p-polarisierter Strahlung von mindestens 12% aufweist, bevorzugt von mindestens 15%.

3. Projektionsanordnung nach Anspruch 1 oder 2, wobei die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades gegenüber p-polarisierter Strahlung höchstens 5 % beträgt, bevorzugt höchstens 3 %, besonders bevorzugt höchstens 1 %.

4. Projektionsanordnung nach einem der Ansprüche 1 bis 3, wobei die Summe der Dicken aller elektrisch leitfähiger Schichten (21) von 15 nm bis 30 nm beträgt, bevorzugt von 20 nm bis 25 nm.

5. Projektionsanordnung nach einem der Anspruch 1 bis 4, wobei mindestens eine der elektrisch leitfähigen Schichten (21) eine Dicke von 1 nm bis 3 nm aufweist.

6. Projektionsanordnung nach Anspruch 5, wobei die Dicke der übrigen elektrisch leitfähigen Schicht (21) höchstens 10 nm beträgt, bevorzugt von 5 nm bis 10 nm.

7. Projektionsanordnung nach einem der Ansprüche 1 bis 6, wobei die elektrisch leitfähigen Schichten (21) auf Basis von Silber ausgebildet sind.

8. Projektionsanordnung nach einem der Ansprüche 1 bis 6, wobei jeweils zwischen zwei elektrisch leitfähigen Schichten (21) eine dielektrische Schichtenfolge angeordnet ist, welche
- eine Entspiegelungsschicht (22) auf Basis von Siliziumnitrid (SiN), Silizium-Metall-Mischnitride wie Siliziumzirkoniumnitrid (SiZrN), Aluminiumnitrid (AIN) oder Zinnoxid (SnO),
- eine Glättungsschicht (23) auf Basis eines Oxids eines oder mehrerer der Elemente Zinn, Silizium, Titan, Zirkonium, Hafnium, Zink, Gallium und Indium,
- eine erste und eine zweite Anpassungsschicht (24, 25) auf Basis von Zinkoxid und
- optional eine Blockerschicht (26) auf Basis von Niob, Titan, Nickel, Chrom und/oder Legierungen davon umfasst.

9. Projektionsanordnung nach Anspruch 8, wobei die elektrisch leitfähige Beschichtung (20) enthält:
- eine Entspiegelungsschicht (22.1) auf Basis von Siliziumnitrid mit einer Dicke von 15 nm bis 25 nm, bevorzugt von18 nm bis 23 nm,
- eine erste Anpassungsschicht (24.1) auf Basis von Zinkoxid mit einer Dicke von 5 nm bis 15 nm, bevorzugt von 8 nm bis 12 nm,
- eine elektrisch leitfähige Schicht (21.1) auf Basis von Silber mit einer Dicke von 4 nm bis 8 nm,
- optional eine Blockerschicht (26.1) mit einer Dicke von 0,1 nm bis 0,5 nm, bevorzugt auf Basis von NiCr,
- eine zweite Anpassungsschicht (25.2) auf Basis von Zinkoxid mit einer Dicke von 5 nm bis 15 nm, bevorzugt von 8 nm bis 12 nm,
- eine Entspiegelungsschicht (22.2) auf Basis eines Silizium-Metall-Mischnitrids mit einer Dicke von 15 nm bis 25 nm, bevorzugt von 18 nm bis 23 nm,
- eine Glättungsschicht (23.2) auf Basis von Zinn-Zink-Mischoxid mit einer Dicke von 5 nm bis 10 nm,
- eine erste Anpassungsschicht (24.2) auf Basis von Zinkoxid mit einer Dicke von 5 nm bis 15 nm, bevorzugt von 8 nm bis 12 nm,
- eine elektrisch leitfähige Schicht (21.2) auf Basis von Silber mit einer Dicke von 7 nm bis 10 nm,
- optional eine Blockerschicht (26.2) auf Basis von NiCr mit einer Dicke von 0,1 nm bis 0,5 nm,
- eine zweite Anpassungsschicht (25.3) auf Basis von Zinkoxid mit einer Dicke von 5 nm bis 15 nm, bevorzugt von 8 nm bis 12 nm,
- eine Entspiegelungsschicht (22.3) auf Basis eines Silizium-Metall-Mischnitrids mit einer Dicke von 5 nm bis 20 nm, bevorzugt von 10 nm bis 15 nm,
- eine Glättungsschicht (23.3) auf Basis Zinn-Zink-Mischoxid mit einer Dicke von 5 nm bis 10 nm,
- eine erste Anpassungsschicht (24.3) auf Basis von Zinkoxid mit einer Dicke von 5 nm bis 15 nm, bevorzugt von 8 nm bis 12 nm,
- eine elektrisch leitfähige Schicht (21.3) auf Basis von Silber mit einer Dicke von 1 nm bis 3 nm,
- optional eine Blockerschicht (26.3) auf Basis von NiCr mit einer Dicke von 0,1 nm bis 0,5 nm,
- eine zweite Anpassungsschicht (25.4) auf Basis von Zinkoxid mit einer Dicke von 5 nm bis 15 nm, bevorzugt von 8 nm bis 12 nm,
- eine Entspiegelungsschicht (22.4) mit einer Dicke von 45 nm bis 60 nm, bevorzugt von 50 nm bis 55 nm, unterteilt in eine dielektrische Schicht (22a.4) auf Basis von Siliziumnitrid mit einer Dicke von 25 nm bis 35 nm, bevorzugt von 28 nm bis 32 nm, und eine optisch hochbrechende Schicht (22b.4) auf Basis eines Silizium-Metall-Mischnitrids mit einer Dicke von 15 nm bis 30nm, bevorzugt 20 nm bis 25 nm,
- eine Glättungsschicht (23.4) auf Basis Zinn-Zink-Mischoxid mit einer Dicke von 5 nm bis 10 nm,
- eine erste Anpassungsschicht (24.4) auf Basis von Zinkoxid mit einer Dicke von 5 nm bis 15 nm, bevorzugt von 8 nm bis 12 nm,
- eine elektrisch leitfähige Schicht (21.4) auf Basis von Silber mit einer Dicke von 5 nm bis 8 nm,
- optional eine Blockerschicht (26.4) auf Basis von NiCr mit einer Dicke von 0,1 nm bis 0,5 nm,
- eine zweite Anpassungsschicht (25.5) auf Basis von Zinkoxid mit einer Dicke von 5 nm bis 15 nm, bevorzugt von 8 nm bis 12 nm,
- eine Entspiegelungsschicht (22.5) auf Basis eines Silizium-Metall-Mischnitrids mit einer Dicke von 30 nm bis 50 nm, bevorzugt von 35 nm bis 40 nm.

10. Projektionsanordnung nach einem der Ansprüche 1 bis 9, wobei die elektrisch leitfähige Beschichtung einen Flächenwiderstand von 1 Ω/□ bis 2 Ω/□ aufweist.

11. Projektionsanordnung nach einem der Ansprüche 1 bis 10, wobei die Strahlung des Projektors (4) im Wesentlichen rein p-polarisiert ist.

12. Projektionsanordnung nach einem der Ansprüche 1 bis 11, wobei die externen Oberflächen (I, IV) der Verbundscheibe (10) im Wesentlichen parallel zueinander angeordnet sind.

13. Projektionsanordnung nach einem der Ansprüche 1 bis 12, wobei die Strahlung des Projektors (4) mit einem Einfallswinkel von 60° bis 70° auf die Verbundscheibe (10) trifft.

14. Projektionsanordnung nach einem der Ansprüche 1 bis 13, wobei die elektrisch leitfähige Beschichtung (20) an eine Spannungsquelle von 40 V bis 50 V angeschlossen ist, um die Verbundscheibe zu beheizen.

15. Verwendung einer Projektionsanordnung nach einem der Ansprüche 1 bis 14 als HUD in einem Kraftfahrzeug, insbesondere einem Personenkraftwagen oder Lastkraftwagen.

## Claims

1. Projection arrangement for a head-up display (HUD), at least comprising
- a composite pane (10), comprising an outer pane (1) and an inner pane (2), which are connected to one another via a thermoplastic intermediate layer (3), with an HUD region (B);
- an electrically conductive coating (20) on the surface (II, III) of the outer pane (1) or of the inner pane (2) facing the intermediate layer (3) or within the intermediate layer (3); and
- a projector (4) that is directed toward the HUD region (B);
wherein the radiation of the projector (4) is p-polarised,
wherein the composite pane (10) with the electrically conductive coating (20) has reflectance of at least 10% relative to p-polarised radiation in the entire spectral range from 450 nm to 650 nm, and
wherein the electrically conductive coating (20) includes at least four electrically conductive layers (21), which are in each case arranged between two dielectric layers or layer sequences,
wherein the sum of the thicknesses of all electrically conductive layers (21) is at most 30 nm and wherein at least one of the electrically conductive layers (21) has a thickness of at most 5 nm.

2. Projection arrangement according to claim 1, wherein the composite pane (10) with the electrically conductive coating (20) has reflectance of at least 12%, preferably of at least 15%, relative to p-polarised radiation in the entire spectral range from 450 nm to 650 nm.

3. Projection arrangement according to claim 1 or 2, wherein the difference between the maximally occurring reflectance and the mean of the reflectance as well as the difference between the minimally occurring reflectance and the mean of the reflectance relative to p-polarised radiation is at most 5%, preferably at most 3%, particularly preferably at most 1%.

4. Projection arrangement according to one of claims 1 through 3, wherein the sum of the thicknesses of all electrically conductive layers (21) is from 15 nm to 30 nm, preferably from 20 nm to 25 nm.

5. Projection arrangement according to one of claims 1 through 4, wherein at least one of the electrically conductive layers (21) has a thickness of 1 nm to 3 nm.

6. Projection arrangement according to claim 5, wherein the thickness of the remaining electrically conductive layer (21) is at most 10 nm, preferably from 5 nm to 10 nm.

7. Projection arrangement according to one of claims 1 through 6, wherein the electrically conductive layers (21) are based on silver.

8. Projection arrangement according to one of claims 1 through 6, wherein a dielectric layer sequence is arranged in each case between two electrically conductive layers (21), which dielectric layer sequence comprises
- an anti-reflective layer (22) based on silicon nitride (SiN), mixed silicon-metal nitrides such as silicon-zirconium nitride (SiZrN), aluminium nitride (AIN), or tin oxide (SnO),
- a smoothing layer (23) based on an oxide of one or more of the elements tin, silicon, titanium, zirconium, hafnium, zinc, gallium, and indium,
- a first and a second matching layer (24, 25) based on zinc oxide, and
- optionally, a blocking layer (26) based on niobium, titanium, nickel, chromium, and/or alloys thereof.

9. Projection arrangement according to claim 8, wherein the electrically conductive coating (20) contains:
- an anti-reflective layer (22.1) based on silicon nitride with a thickness from 15 nm to 25 nm, preferably from 18 nm to 23 nm,
- a first matching layer (24.1) based on zinc oxide with a thickness from 5 nm to 15 nm, preferably from 8 nm to 12 nm,
- an electrically conductive layer (21.1) based on silver with a thickness from 4 nm to 8 nm,
- optionally, a blocking layer (26.1) with a thickness from 0.1 nm to 0.5 nm, preferably based on NiCr,
- a second matching layer (25.2) based on zinc oxide with a thickness from 5 nm to 15 nm, preferably from 8 nm to 12 nm,
- an anti-reflective layer (22.2) based on a mixed silicon-metal nitride with a thickness from 15 nm to 25 nm, preferably from 18 nm to 23 nm,
- a smoothing layer (23.2) based on mixed tin-zinc oxide with a thickness from 5 nm to 10 nm,
- a first matching layer (24.2) based on zinc oxide with a thickness from 5 nm to 15 nm, preferably from 8 nm to 12 nm,
- an electrically conductive layer (21.2) based on silver with a thickness from 7 nm to 10 nm,
- optionally, a blocking layer (26.2) based on NiCr with a thickness from 0.1 nm to 0.5 nm,
- a second matching layer (25.3) based on zinc oxide with a thickness from 5 nm to 15 nm, preferably from 8 nm to 12 nm,
- an anti-reflective layer (22.3) based on a mixed silicon-metal nitride with a thickness from 5 nm to 20 nm, preferably from 10 nm to 15 nm,
- a smoothing layer (23.3) based on mixed tin-zinc oxide with a thickness from 5 nm to 10 nm,
- a first matching layer (24.3) based on zinc oxide with a thickness from 5 nm to 15 nm, preferably from 8 nm to 12 nm,
- an electrically conductive layer (21.3) based on silver with a thickness from 1 nm to 3 nm,
- optionally, a blocking layer (26.3) based on NiCr with a thickness from 0.1 nm to 0.5 nm,
- a second matching layer (25.4) based on zinc oxide with a thickness from 5 nm to 15 nm, preferably from 8 nm to 12 nm,
- an anti-reflective layer (22.4) with a thickness from 45 nm to 60 nm, preferably from 50 nm to 55 nm, subdivided into a dielectric layer (22a.4) based on silicon nitride with a thickness from 25 nm to 35 nm, preferably from 28 nm to 32 nm, and an optically high refractive layer (22b.4) based on a mixed silicon-metal nitride with a thickness from 15 nm to 30nm, preferably 20 nm to 25 nm,
- a smoothing layer (23.4) based on mixed tin-zinc oxide with a thickness from 5 nm to 10 nm,
- a first matching layer (24.4) based on zinc oxide with a thickness from 5 nm to 15 nm, preferably from 8 nm to 12 nm,
- an electrically conductive layer (21.4) based on silver with a thickness from 5 nm to 8 nm,
- optionally, a blocking layer (26.4) based on NiCr with a thickness from 0.1 nm to 0.5 nm,
- a second matching layer (25.5) based on zinc oxide with a thickness from 5 nm to 15 nm, preferably from 8 nm to 12 nm,
- an anti-reflective layer (22.5) based on a mixed silicon-metal nitride with a thickness from 30 nm to 50 nm, preferably from 35 nm to 40 nm.

10. Projection arrangement according to one of claims 1 through 9, wherein the electrically conductive coating has sheet resistance of 1 Ω/□ to 2 Ω/□.

11. Projection arrangement according to one of claims 1 through 10, wherein the radiation of the projector (4) is essentially purely p-polarised.

12. Projection arrangement according to one of claims 1 through 11, wherein the external surfaces (I, IV) of the composite pane (10) are arranged substantially parallel to one another.

13. Projection arrangement according to one of claims 1 through 12, wherein the radiation of the projector (4) strikes the composite pane (10) with an angle of incidence of 60° to 70°.

14. Projection arrangement according to one of claims 1 through 13, wherein the electrically conductive coating (20) is connected to a voltage source of 40 V to 50 V in order to heat the composite pane.

15. Use of a projection arrangement according to one of claims 1 through 14 as an HUD in a motor vehicle, in particular in a passenger car or a truck.

## Revendications

1. - Dispositif de projection pour un affichage tête haute (« Head-Up-Display » HUD)), comportant au moins
- une vitre feuilletée (10), comportant une vitre extérieure (1) et une vitre intérieure (2), qui sont reliées entre elles par une couche intermédiaire thermoplastique (3), avec une région HUD (B) ;
- un revêtement (20) conducteur de l'électricité sur la surface (II, III) de la vitre extérieure (1) ou de la vitre intérieure (2) tournée vers la couche intermédiaire (3) ou à l'intérieur de la couche intermédiaire (3) ; et
- un projecteur (4), qui est dirigé vers la région HUD (B) ;
dans lequel le rayonnement du projecteur (4) est polarisé p,
dans lequel la vitre feuilletée (10) avec le revêtement (20) conducteur de l'électricité présente, dans l'ensemble du domaine spectral de 450 nm à 650 nm, une réflectance par rapport au rayonnement polarisé p d'au moins 10%, et
dans lequel le revêtement (20) conducteur de l'électricité comporte au moins quatre couches (21) conductrices de l'électricité, lesquelles sont chacune disposées entre deux couches ou successions de couches diélectriques,
dans lequel la somme des épaisseurs de toutes les couches (21) conductrices de l'électricité s'élève au plus à 30 nm, et ;
dans lequel au moins l'une des couches (21) conductrices de l'électricité présente une épaisseur d'au plus 5 nm.

2. - Dispositif de projection selon la revendication 1, dans lequel la vitre feuilletée (10) avec le revêtement (20) conducteur de l'électricité présente, dans l'ensemble du domaine spectral de 450 nm à 650 nm, une réflectance par rapport au rayonnement polarisé p d'au moins 12 %, de préférence d'au moins 15 %.

3. - Dispositif de projection selon l'une des revendications 1 ou 2, dans lequel la différence entre la réflectance qui se présente de façon maximale et la valeur moyenne de la réflectance ainsi que la différence entre la réflectance qui se présente de façon minimale et la valeur moyenne de la réflectance par rapport au rayonnement polarisé p s'élève au plus à 5 %, de préférence au plus à 3 %, de manière particulièrement préférée au plus à 1 %.

4. - Dispositif de projection selon l'une des revendications 1 à 3, dans lequel la somme des épaisseurs de toutes les couches (21) conductrices de l'électricité est de 15 nm à 30 nm, de préférence de 20 nm à 25 nm.

5. - Dispositif de projection selon l'une des revendications 1 à 4, dans lequel au moins l'une des couches (21) conductrices de l'électricité présente une épaisseur de 1 nm à 3 nm.

6. - Dispositif de projection selon la revendication 5, dans lequel l'épaisseur de la couche (21) conductrice de l'électricité restante est au plus de 10 nm, de préférence de 5 nm à 10 nm.

7. - Dispositif de projection selon l'une des revendications 1 à 6, dans lequel les couches (21) conductrices de l'électricité sont à base d'argent.

8. - Dispositif de projection selon l'une des revendications 1 à 6, dans lequel à chaque fois entre deux couches (21) conductrices de l'électricité, une succession de couches diélectriques est disposée, laquelle comporte :
- une couche antireflet (22) à base de nitrure de silicium (SiN), de nitrures mixtes de silicium-métal tels que le nitrure de silicium-zirconium (SiZrN), de nitrure d'aluminium (AIN) ou d'oxyde d'étain (SnO) ;
- une couche de lissage (23) à base d'un oxyde d'un ou plusieurs des éléments étain, silicium, titane, zirconium, hafnium, zinc, gallium et indium ;
- une première et une deuxième couche d'adaptation (24, 25) à base d'oxyde de zinc ; et
- facultativement une couche de blocage (26) à base de niobium, de titane, de nickel, de chrome et/ou d'alliages de ceux-ci.

9. - Dispositif de projection selon la revendication 8, dans lequel le revêtement (20) conducteur de l'électricité contient :
- une couche antireflet (22.1) à base de nitrure de silicium ayant une épaisseur de 15 nm à 25 nm, de préférence de 18 nm à 23 nm ;
- une première couche d'adaptation (24.1) à base d'oxyde de zinc ayant une épaisseur de 5 nm à 15 nm, de préférence de 8 nm à 12 nm ;
- une couche (21.1) conductrice de l'électricité à base d'argent ayant une épaisseur de 4 nm à 8 nm ;
- facultativement une couche de blocage (26.1) ayant une épaisseur de 0,1 nm à 0,5 nm, de préférence à base de NiCr ;
- une seconde couche d'adaptation (25.2) à base d'oxyde de zinc ayant une épaisseur de 5 nm à 15 nm, de préférence de 8 nm à 12 nm ;
- une couche antireflet (22.2) à base d'un nitrure mixte de silicium - métal ayant une épaisseur de 15 nm à 25 nm, de préférence de 18 nm à 23 nm ;
- une couche de lissage (23.2) à base d'oxyde mixte d'étain - zinc ayant une épaisseur de 5 nm à 10 nm ;
- une première couche d'adaptation (24.2) à base d'oxyde de zinc ayant une épaisseur de 5 nm à 15 nm, de préférence de 8 nm à 12 nm ;
- une couche (21.2) conductrice de l'électricité à base d'argent ayant une épaisseur de 7 nm à 10 nm ;
- facultativement, une couche de blocage (26.2) à base de NiCr ayant une épaisseur de 0,1 nm à 0,5 nm ;
- une seconde couche d'adaptation (25.3) à base d'oxyde de zinc ayant une épaisseur de 5 nm à 15 nm, de préférence de 8 nm à 12 nm ;
- une couche antireflet (22.3) à base d'un nitrure mixte de silicium-métal ayant une épaisseur de 5 nm à 20 nm, de préférence de 10 nm à 15 nm ;
- une couche de lissage (23.3) à base d'oxyde mixte d'étain - zinc ayant une épaisseur de 5 nm à 10 nm ;
- une première couche d'adaptation (24.3) à base d'oxyde de zinc ayant une épaisseur de 5 nm à 15 nm, de préférence de 8 nm à 12 nm ;
- une couche (21.3) conductrice de l'électricité à base d'argent ayant une épaisseur de 1 nm à 3 nm ;
- facultativement, une couche de blocage (26.3) à base de NiCr ayant une épaisseur de 0,1 nm à 0,5 nm ;
- une seconde couche d'adaptation (25.4) à base d'oxyde de zinc ayant une épaisseur de 5 nm à 15 nm, de préférence de 8 nm à 12 nm ;
- une couche antireflet (22.4) ayant une épaisseur de 45 nm à 60 nm, de préférence de 50 nm à 55 nm, subdivisée en une couche diélectrique (22a.4) à base de nitrure de silicium ayant une épaisseur de 25 nm à 35 nm, de préférence de 28 nm à 32 nm, et une couche hautement réfringente optiquement (22b.4) à base d'un nitrure mixte de silicium-métal ayant une épaisseur de 15 nm à 30 nm, de préférence de 20 nm à 25 nm ;
- une couche de lissage (23.4) à base d'oxyde mixte d'étain - zinc ayant une épaisseur de 5 nm à 10 nm ;
- une première couche d'adaptation (24.4) à base d'oxyde de zinc ayant une épaisseur de 5 nm à 15 nm, de préférence de 8 nm à 12 nm ;
- une couche (21.4) conductrice de l'électricité à base d'argent ayant une épaisseur de 5 nm à 8 nm ;
- facultativement, une couche de blocage (26.4) à base de NiCr ayant une épaisseur de 0,1 nm à 0,5 nm ;
- une seconde couche d'adaptation (25.5) à base d'oxyde de zinc ayant une épaisseur de 5 nm à 15 nm, de préférence de 8 nm à 12 nm ;
- une couche antireflet (22.5) à base d'un nitrure mixte de silicium-métal ayant une épaisseur de 30 nm à 50 nm, de préférence de 35 nm à 40 nm.

10. - Dispositif de projection selon l'une des revendications 1 à 9, dans lequel le revêtement conducteur de l'électricité présente une résistance surfacique de 1 Ω/□ à 2 Ω/□.

11. - Dispositif de projection selon l'une des revendications 1 à 10, dans lequel le rayonnement du projecteur (4) est sensiblement purement polarisé p.

12. - Ensemble de projection selon l'une des revendications 1 à 11, dans lequel les surfaces externes (I, IV) de la vitre feuilletée (10) sont sensiblement parallèles entre elles.

13. - Ensemble de projection selon l'une des revendications 1 à 12, dans lequel le rayonnement du projecteur (4) frappe la vitre feuilletée (10) avec un angle d'incidence de 60° à 70°.

14. - Ensemble de projection selon l'une des revendications 1 à 13, dans lequel le revêtement (20) conducteur de l'électricité est raccordé à une source de tension de 40 V à 50 V pour chauffer la vitre feuilletée.

15. - Utilisation d'un dispositif de projection selon l'une des revendications 1 à 14 comme HUD dans un véhicule automobile, en particulier une voiture particulière ou un poids lourd.
